# EUROPEAN PATENT APPLICATION

(11) **EP 3 805 546 A1**
(43) Date of publication of application: **14.04.2021**
(21) Application number: 19201994.1
(22) Date of filing: 08.10.2019
(51) Int. Cl.: F02M 55/02, F02M 55/00, F02M 35/10, F16L 47/22, B29C 45/14

(54) **FUEL RAIL ASSEMBLY FOR AN INTERNAL COMBUSTION ENGINE AND METHOD OF MANUFACTURING A FUEL RAIL ASSEMBLY**

(71) Applicant: Vitesco Technologies GmbH, 30165 Hannover (DE)
(72) Inventor: Serra, Giandomenico - c/o Continental Automotive GmbH, 81737 München (DE); Di Domizio, Gisella - c/o Continental Automotive GmbH, 81737 München (DE); Pasquali, Marco - c/o Continental Automotive GmbH, 81737 München (DE)

(57) **Abstract**

A fuel rail assembly for a fuel injection system for an internal combustion engine is provided. The fuel rail assembly has a fuel rail comprising an elongate tubular fuel rail body (4) having an internal volume comprising a reservoir for fuel, the fuel rail having an inlet port (8) through which fuel is supplied to the reservoir. The fuel rail body (4) is formed of a mouldable material and is moulded over an adapter (20) to which the inlet port (8) is secured. A clamping ring (32) is engaged with the adapter and has an extension (34) which overlies the fuel rail body (4) to clamp the fuel rail body (4) between the adapter (2) and the clamping ring (32).

## Description

The present disclosure relates to a fuel rail assembly for an internal combustion engine, particularly but not exclusively, to a fuel rail assembly for a multi-cylinder gasoline direct injection engine and to a method of manufacturing a fuel rail assembly.

The fuel rail assembly comprises an elongate fuel rail of generally tubular configuration having an interior volume defining a reservoir for fuel which is supplied at high pressure into an inlet port of the fuel rail by a high-pressure fuel pump. Spaced along the fuel rail are a plurality of fuel delivery outlets hydraulically coupling the fuel rail to individual injectors which are operable to inject fuel into the engine. In one form, the fuel injectors are each arranged to inject fuel directly into an associated cylinder. In an alternative form, the fuel injectors are arranged to inject fuel into an inlet manifold which may serve one or more cylinders.

A fuel rail may be formed of more than one material. An example of such a fuel rail is disclosed in EP 3 470 661 A1. The use of a plastics material for the body of the fuel rail has advantages in terms of lower weight, cost of material and manufacturing cost but difficulties can occur in securing components to the fuel rail, particularly components subject to the high pressure of the fuel in the fuel rail. In addition to the stresses caused by the high pressure in the fuel rail, the harsh operating environment of a fuel rail in a vehicle involves additionally stresses caused by high temperatures, vibration and operational stresses in the vehicle.

Shrink wrapping of plastics materials such as pipes onto metal components has limitations in providing a satisfactory seal between the fuel rail body and the components such as an inlet port and outlet ports secured to the fuel rail. US published Patent Application No. US 2014/090721 discloses a device in which a fitting is inserted in a blow moulded duct part while the duct part is in a plasticised state, relying on shrink wrapping as the product cools down and shrinks. However, the system is specifically for low pressure situations.

Improvements to fuel rails are desirable to further reduce the risk of leakage.

According to the present disclosure there is provided a fuel rail assembly for a fuel injection system for an internal combustion engine, the assembly having a fuel rail comprising an elongate tubular body having an internal volume comprising a reservoir for fuel, the fuel rail having an inlet port through which fuel is supplied to the reservoir. The fuel rail body is formed of a mouldable material and is moulded over an adapter to which the inlet port is secured. A clamping ring is engaged with the adapter and has an extension which overlies the fuel rail body to clamp the fuel rail body between the adapter and the clamping ring.

The clamping ring provides an additional sealing action between the fuel rail body, which is moulded onto the adapter, and the adapter by clamping the fuel rail body between the extension and the adapter and compressing the mouldable material of the fuel rail body. Typically the clamping ring and the extension are cylindrical so that an end portion of the fuel rail body is radially clamped between the extension of the clamping ring and the outer surface of the adapter. Since the clamping ring is engaged after the fuel rail body is moulded onto the adapter, the mouldable material has already shrunk onto the adapter and the clamping ring can create an additional compression on the fuel rail body. This allows additional sealing despite the shrinkage of the mouldable material, because the clamping ring is assembled after the part has cooled down, and with a certain interference, avoiding the possibility of detachment of the fuel rail body from the adapter when the pressure is applied. Any variation in the fit resulting from the different thermal expansion coefficients of the materials of the fuel rail body and adapter can be compensated by use of the additional clamping ring.

Thus a seal that is more reliable also at higher pressures and, is therefore, suitable for use in higher pressure applications such as gasoline direct injection engines is provided.

In some embodiments, the clamping ring is threadedly engaged with the adapter. An inner surface of the clamping ring includes a thread that engages with a thread on an outer surface of the adapter. The extension, which is typically cylindrical, includes a surface without a thread that engages an outer surface of the fuel rail body.

In other embodiments, the clamping ring can be connected to the adapter by press-fit or other technology.

In a further embodiment, the extension of the clamping ring is an interference fit on the fuel rail body, or is such as to ensure that no clearance is formed between the extension and the surface of the fuel rail body in the assembled fuel rail assembly. In some embodiments, the extension is cylindrical.

In some embodiments, the clamping ring and in particular the extension has a thickness T, a length L and a base width W. The base width W is the length of the connection between the clamping ring and the adapter, for example the length of the thread in the case of a threaded connection. These dimensions can be selected so as to provide a certain elasticity given by the shape such that it is able to keep the plastic part, having thickness P, in position, thanks to the elasticity of the geometry of the clamping ring.

The dimensions and geometry of the clamping ring, adapter and fuel rail body and material combination can be selected so as to further improve sealing between the two parts having different materials depending on particular application requirements. The following features may be used in any combination:
- the thickness for one or both of the extension and clamped end portion of the fuel rail body can be varied to obtain different elasticity and different containing effects;
- the distance between the diameter of the extension, in particular the inner diameter and the diameter of the fuel rail body contained by it, and the axis of the fuel rail may be varied depending on the stress which may be determined from theoretical calculations;
- the shape of the sealing connection between the extension having thickness T, the base width W and length L of the clamping ring and the fuel rail body may be varied by selection of the thickness T, base width W and length L of the extension;
- the ratio between L and T gives the elasticity of the metallic part and can be optimized depending on the stress determined from theoretical calculations;
- the ratio between P, the thickness of the clamped region of the fuel rail body, and T, the thickness of the extension, is linked to the force needed for the containment of the plastic part and may be varied;
- the value of W is proportional to the mechanical resistance of the metallic part subject to force from the mouldable material when temperature and/or pressure are applied and can be optimized depending on the stress determined from theoretical calculations.

In an embodiment, a stop is formed between the clamping ring and the adapter to limit the extent to which the clamping ring can be screwed onto the adapter.

In yet another embodiment, a resilient ring is located between the free end of the extension and a shoulder on the material of the fuel rail.

In an embodiment, a seal in the form of a deformable insert element is located between the adapter and the inlet port. The additional seal may be used to further reduce the risk of fuel leakage from the reservoir. The deformable insert element may be a metallic ring.

In another embodiment, the inlet port is threadedly engaged with the adapter and the deformable insert element comprises an annular ring deformed when the inlet port is screwed onto the adapter to effect a seal between the adapter and the inlet port. In this embodiment, when the annular ring is deformed between the adapter and the inlet port, the material of the annular ring bites into the material of the adapter and the inlet port. This sealing action may be used to form a more complete seal between the two components to prevent fuel leaking from the reservoir between the inlet port and the adapter.

The fuel rail body may be formed of a mouldable plastics material and the inlet port and the adapter may be formed of a metal.

In an embodiment, the inlet port, clamping ring and the adapter are formed of a harder material than the mouldable material of the fuel rail body.

Any combination of materials, in which one can be overmolded one over the other, can be used to form the fuel rail. In one example combination, plastic for the fuel rail body and metal for the adapter and clamping ring are used.

A method of manufacturing a fuel rail assembly is also provided. The method comprises providing a fuel rail comprising an elongate tubular fuel rail body having an internal volume comprising a reservoir for fuel, the fuel rail body being formed of a mouldable material, such as plastic, moulding the fuel rail body over an adapter, which may be formed of metal, securing an inlet port through which fuel is supplied to the reservoir to the adapter, and engaging a clamping ring comprising an extension with the adapter such that the extension overlies the fuel rail body that is moulded onto the adapter and clamps the fuel rail body between the adapter and the extension of the clamping ring.

The clamping ring is, therefore, applied to the structure after the fuel rail body has been moulded to the adapter so that the cooled material of the fuel rail body can be placed under additional radial compression between the extension and the adapter and the seal between the different materials of the fuel rail body and the adapter can be improved.

In some embodiments, the clamping ring is threadedly engaged with an outer surface of the adapter such that the extension overlies the fuel rail body that is moulded onto the adapter and clamps the fuel rail body between the adapter and the extension of the clamping ring.

In some embodiments, the inlet port is threadedly engaged with an inner surface of the adapter to secure the inlet port to the fuel rail.

Preferred embodiments of the present disclosure will now be described by way of example with reference to the accompanying figures, in which:-
- Figure 1A: shows an end view of a fuel rail assembly,
- Figure 1B: shows a side view along the line A-A of Figure 1A, and
- Figure 2: illustrates an alternative embodiment.

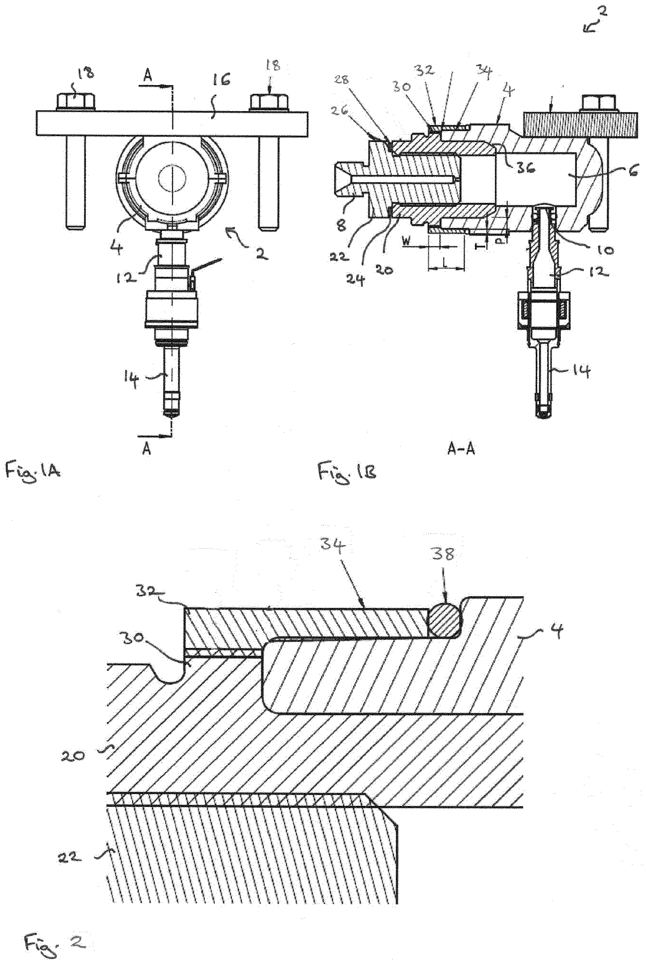

Referring now to Figures 1A and 1B, there is shown a fuel rail assembly 2 intended for use with a multi-cylinder direct injection gasoline internal combustion engine. The fuel rail assembly 2 comprises an elongate tubular member having a body 4 formed of a mouldable plastics material. The interior volume of the body comprises a fuel reservoir 6 to which fuel is supplied through an inlet port 8 by a high-pressure fuel pump (not shown). A fuel outlet 10 provides a hydraulic connection from the reservoir 6 to an outlet passage 12 which is connected to the inlet of a fuel injector 14.

Although only one fuel injector 14 is shown, it will be understood that a plurality of fuel outlets are spaced along the length of the fuel rail assembly 2, one for each cylinder of the engine. The fuel rail assembly is secured to the engine by a mounting plate 16 secured to the body 4 of the fuel rail. Bolts 18 are provided through which the fuel rail assembly 2 is secured to the engine. (not shown). The adapter 20 has an external peripheral flange 30 having a screw thread on its outer circumference. When the fuel rail body 4 is over moulded onto the adapter 20 the material of the fuel rail body 4 abuts the peripheral flange 30.

As shown in Figure 1B, at the inlet port 8, the fuel rail body 4 has moulded therein by over moulding during the forming of the fuel rail body 4, a generally cylindrical adapter 20. The adapter 20 has an internal screw thread into which an inlet fitting 22 is screwed. The inlet fitting 22 has a shoulder 24 which abuts the peripheral end face 26 of the adapter 20 with a seal in the form of a deformable metallic ring 28 disposed between the shoulder 24 and the peripheral end face 26. When the inlet fitting 22 is screwed securely into the adapter 20 the metallic ring 28 is deformed until it bites into the surfaces of the shoulder 24 and the interface 26 to form a complete seal between the adapter 20 and the inlet fitting 22.

A clamping ring 32 has a co-axial cylindrical extension 34 which when the clamping ring 32 is screwed onto the peripheral flange 30, overlies the end of the body 4 where it engages the body 4 firmly, typically with an interference fit or similar close fit with no clearance between the two. In this way, a peripheral force is provided which acts against any tendency of the fuel rail body 4 moving outwardly away from the adapter 20 under the pressure of the internal fuel, to thereby prevent the creation of a leakage path between the adapter 20 and the fuel rail body 4. The clamping ring 32 has a shoulder which engages the adapter 20 so that the cylindrical extension 34 is accurately positioned over the fuel rail body 4 to clamp the end of the body 4 between the cylindrical extension 34 and the adapter 20 to further reduce the risk of leakage paths being created between these components by relative movement between the components. The innermost end 36 of the adapter 20 is curved on its outer surface to facilitate the flow of moulding material during the moulding of the fuel rail body 4 over the adapter 20 to ensure that no voids are left.

Referring now to Figure 2, there is shown an alternative embodiment in which instead of the end face of the cylindrical extension 34 abutting the material of the fuel rail body 4, a slight gap is left to accommodate a resilient O-ring 38 which further reduces the risk of leakages occurring between the clamping ring 32, the adapter 20 and the body 4 of the fuel rail.

The clamping ring 32 has a thickness T, a length L and a base width W. The fuel rail body 4 has a thickness P in the region between the inner surface of the extension 34 and the outer surface of the adapter 20. The dimensions of the clamping ring 32 may be selected so as to provide a certain elasticity so that the clamping ring 32 is able to keep fuel rail body 4, having thickness P in the region between the inner surface of the extension 34 and the outer surface of the adapter 20, in position, without stressing it.

The dimensions and geometry of the clamping ring, adapter and fuel rail body and material combination can be selected so as to further improve sealing between the two parts having different materials depending on particular application requirements. The following features may be used in any combination:
- one or both of the thickness T of the extension 32 and thickness P of the clamped end portion of the fuel rail body 4 can be varied to obtain different elasticity and different containing effects;
- the distance between the diameter of the extension 32, in particular the inner diameter, and the diameter of the fuel rail body 4 contained by it and the axis of the fuel rail may be varied depending on the stress. The stress may be determined from theoretical calculations;
- the shape of the sealing connection between the extension 34 and the fuel rail body 4 may be varied by selection of the thickness T, base width W and length L of the clamping ring 32;
- the ratio between L and T of the clamping ring 32 may be selected to provide a suitable elasticity of the clamping ring 32 and can be optimized depending on the stress determined from theoretical calculations;
- the ratio between P, the thickness of the clamped region of the fuel rail body, and T, the thickness of the extension, is linked to the force needed for the containment of the plastic part and may be varied;
- the value of W is proportional to the mechanical resistance of the clamping ring 32 which is subject to force from plastic when temperature and/or pressure are applied. The width W can be optimized depending on the stress that is determined from theoretical calculations.

To summarise, a fuel rail assembly containing a plastic part and a metallic part is provided that has a design can be used for high pressure applications which include metallic interfaces that come into contact with the fuel, i.e. metallic wet interfaces, such as gasoline direct injection engines. The dimensions and geometry of the clamping ring, adapter and fuel rail body and material combination can be selected so as to further improve sealing between the two parts having different materials depending on particular application requirements.

### Reference List

- 2: fuel rail assembly
- 4: fuel rail body
- 6: reservoir
- 8: inlet port
- 10: fuel outlet
- 12: outlet passage
- 14: fuel injector
- 16: mounting plate
- 18: bolt
- 20: adapter
- 22: inlet fitting
- 24: shoulder
- 26: end face
- 28: metallic ring
- 30: peripheral flange
- 32: clamping ring
- 34: extension
- 36: innermost end
- 38: O-ring

## Claims

1. A fuel rail assembly for a fuel injection system for an internal combustion engine, the assembly comprising a fuel rail comprising an elongate tubular fuel rail body (4) having an internal volume comprising a reservoir (6) for fuel, the fuel rail having an inlet port (8) through which fuel is supplied to the reservoir (6), the fuel rail body (4) being formed of a mouldable material, wherein the fuel rail body (4) is moulded over an adapter (20) to which the inlet port (8) is secured, wherein a clamping ring (32) is engaged with the adapter (20) and comprises an extension (34) which overlies the fuel rail body (4) to clamp the fuel rail body (4) between the adapter (20) and the clamping ring (32).

2. A fuel rail assembly according to claim 1, wherein the extension (34) of the clamping ring (32) is an interference fit on the fuel rail body (4), or is such as to ensure that no clearance is formed between the extension (34) and the surface of the fuel rail body (4)in the assembled fuel rail assembly.

3. A fuel rail assembly according claim 1 or claim 2, wherein the clamping ring is threadedly engaged with the adapter (20).

4. A fuel rail assembly according to claim 3, wherein a stop is formed between the clamping ring (32) and the adapter (20) to limit the extent to which the clamping ring (32) can be screwed onto the adapter (20).

5. A fuel rail assembly according to any one of the preceding claims, in which a resilient ring (38) is located between the free end of the extension (34) and a shoulder on the material of the fuel rail body (4).

6. A fuel rail assembly according to any one of the preceding claims, further comprising a seal in the form of a deformable insert element (28), the seal being located between the adapter (20) and the inlet port (8.

7. A fuel rail assembly according to claim 6, wherein the inlet port (8) is threadedly engaged with the adapter (20) and the deformable insert element (28) comprises an annular ring deformed when the inlet port (8) is screwed onto the adapter (20) to effect a seal between the adapter(20) and the inlet port (8).

8. A fuel rail assembly according to claim 7, wherein when the deformable insert element (28) is deformed between the adapter (20) and the inlet port (8), the material of the deformable insert element (28) bites into the material of the adapter (20) and the inlet port (8).

9. A fuel rail assembly according to any one of the preceding claims, in which the fuel rail body (4) is formed of a mouldable plastics material.

10. A fuel rail assembly according to any one of the preceding claims, in which the inlet port (8) and the adapter (20) are formed of a metal.

11. A fuel rail assembly according to any one of the preceding claims, in which the inlet port (8), the clamping ring (32) and the adapter (20) are formed of a harder material than the mouldable material of the fuel rail body.

12. A method of manufacturing a fuel rail assembly, the method comprising:
providing a fuel rail comprising an elongate tubular fuel rail body (4) having an internal volume comprising a reservoir (6) for fuel, the fuel rail body (4) being formed of a mouldable material;
moulding the fuel rail body (4) over an adapter (20)
securing an inlet port (8) through which fuel is supplied to the reservoir (6) to the adapter (20);
engaging a clamping ring (32) comprising an extension (34) with the adapter (20) such that the extension (34) overlies the fuel rail body (4) that is moulded onto the adapter (20) and clamps the fuel rail body (4) between the adapter (20) and the extension (34)of the clamping ring (32).

13. A method according to claim 12, wherein the clamping ring (32) is threadedly engaged with an outer surface of the adapter (20).

14. A method according to claim 12 or claim 13, wherein the inlet port (8) is threadedly engaged with an inner surface of the adapter (20) to secure the inlet port (8) to the fuel rail.
